# EUROPÄISCHE PATENTSCHRIFT

(11) **EP 2 878 421 B1**
(45) Veröffentlichungstag und Bekanntmachung des Hinweises auf die Patenterteilung: **27.12.2017**
(21) Anmeldenummer: 14191701.3
(22) Anmeldetag: 04.11.2014
(51) Int. Cl.: B29C 47/08, B29C 47/60, B29C 47/92, B29C 47/96

(54) **System und Verfahren zur Überprüfung des Aufbaus einer Extruderschnecke**
System and method for verifying the structure of an extruder screw
Système et méthode de vérification de la construction d'une vis d'extrudeuse

(30) Priorität: 25.11.2013 DE 102013112971
(43) Veröffentlichungstag der Anmeldung: 03.06.2015
(73) Patentinhaber: Leistritz Extrusionstechnik GmbH, 90459 Nürnberg (DE)
(72) Erfinder: Wolf, Sven, 90522 Oberasbach (DE); Rechter, Frank, 97215 Uffenheim OT Welbhausen (DE)
(74) Vertreter: Lindner Blaumeier Patent- und Rechtsanwälte

(56) Entgegenhaltungen:
- EP-A2- 2 065 162
- DE-B3- 10 338 180
- DE-C1- 19 744 443
- US-A- 4 839 955
- MARIUS JANAS: "Zukunftsweisende Prozessoptimierung", KUNSTSTOFFE, Bd. 2013, Nr. 12, 17. Dezember 2013 (2013-12-17), Seiten 38-41, XP055182439,
- MATTHEW H. NAITOVE ET AL: "Produkte aus Nordamerika und Kanada auf der K2004", KUNSTSTOFFE, Bd. 2004, Nr. 10, 31. Oktober 2004 (2004-10-31), Seiten 2-17, XP055182443, München
- Coperion Gmbh: "Vorbeugende Verschleißdiagnose stellt Produktqualität sicher", kunststoffFORUM, 17. Februar 2011 (2011-02-17), XP055182451, Wolfsburg Gefunden im Internet: URL:http://www.kunststoffforum.de/informat ion/news_vorbeugende-verschleissdiagnose-s tellt-produktqualitaet-sicher_7065 [gefunden am 2015-04-13]
- N.N.: "Bedienungsanleitung Kidizoom Twist", , 17 June 2011 (2011-06-17), pages 1-34, XP055278952, Filderstadt Retrieved from the Internet: URL:https://www.vtech.de/download/file/ind ex/id/63/product/420/Trans [retrieved on 2016-06-08]

## Beschreibung

Die Erfindung betrifft ein System zur Überprüfung des Aufbaus einer Extruderschnecke bestehend aus einer Welle und darauf nacheinander in definierter Reihenfolge aufzuschiebenden oder aufgeschobenen Schneckenelementen, wobei jedes Schneckenelement eine elementspezifische äußere Geometrie aufweist.

Extruder dienen bekanntlich der Aufbereitung von Massen, die in einem Arbeitsteil respektive einem Zylinder über eine oder mehrere dort drehende Extruderschnecken bearbeitet werden. Lediglich exemplarisch sind Kunststoffmassen zu nennen, die im Extruder aufgeschmolzen und compoundiert werden, um nachfolgend weiterverarbeitet zu werden, beispielsweise zur Bildung von Kunststoffgranulat oder im Rahmen von Spritzgussarbeiten zur Herstellung von Bauteilen und Ähnlichem. Zu nennen sind des Weiteren exemplarisch pharmazeutische Massen, die der Herstellung von Arzneimitteln, beispielsweise in Tablettenform dienen. Auch hier werden die entsprechenden Stoffe im Zylinder über die Schnecken bearbeitet und gemischt etc., um die gewünschte homogene Zusammensetzung des Extrudats zu erzielen. Um dies zu ermöglichen sind am Arbeitsteil vorgesehen respektive dem Arbeitsteil zugeordnet eine oder mehrere weitere Einrichtungen wie beispielsweise entsprechende Zuführeinrichtungen, über die die zu verarbeitenden Stoffe dosiert aufgegeben werden, oder Heizeinrichtungen, die der Temperierung des Zylinders oder der Zylinderabschnitte, aus denen ein solcher Zylinder üblicherweise zusammengesetzt ist, dienen und Ähnliches. Auch im Lebensmittelbereich werden häufig entsprechende Massen unter Verwendung eines Extruders aufbereitet.

Wesentlich für die Funktion des Extruders ist die eine oder sind die mehreren Extruderschnecken, die unmittelbar der Materialbearbeitung dienen. Je nach aufzubereitendem Material und nach entsprechender Arbeitsaufgabe werden unterschiedliche Schneckentypen unterschieden. Bekannt sind sogenannte Kompaktschnecken, die aus einem Stück gefertigt sind. D. h., dass die spezifische Schneckengeometrie unmittelbar aus einem einzigen Materialblock herausgearbeitet ist. Daneben sind sogenannte gesteckte Extruderschnecken bekannt, bei denen auf eine Welle eine Vielzahl einzelner Schneckenelemente der Reihe nach aufgesteckt sind, wobei die Schneckenelemente und die Schneckenwelle über entsprechende Verzahnungen miteinander drehfest miteinander verbunden sind. Jedes Schneckenelement weist eine bestimmte Geometrie auf, die dem Schneckenelement seine typische Funktion verleiht. Üblicherweise werden auf eine Welle 20 - 30, im Bedarfsfall auch mehr einzelner Schneckenelemente aufgesteckt, so dass sich letztlich eine relativ komplexe Gesamtgeometrie ergibt. Jede einzelne derart hergestellte Extruderschnecke ist hinsichtlich ihrer Geometrie dabei sehr spezifisch auf einen bestimmten Arbeitsprozess ausgelegt, d. h., dass eine bestimmte Schnecke einer bestimmten Arbeitsaufgabe zugeordnet ist, der wiederum spezifische Betriebsparameter, die der Bediener der Steuerungseinrichtung zum Betrieb des Extruders einstellen muss, zugeordnet sind. D. h., dass die Reihenfolge, in der die einzelnen Schneckenelemente auf die Welle geschoben werden, genau einzuhalten ist, um Steckfehler zu vermeiden, die in einer veränderten und für das beabsichtigte Arbeitsverfahren ungeeigneten Geometrie resultieren würden. Da jedem einzelnen Schneckenelement eine bestimmte Funktion zukommt, beispielsweise eine Förderfunktion oder eine Knetfunktion oder eine Mischfunktion und Ähnliches, jeweils resultierend aus der elementspezifischen Außengeometrie, führt folglich jeder Steckfehler dazu, dass - sofern die falsch gesteckte Schneckenwelle überhaupt verbaut werden kann - nicht das gewünschte Arbeitsergebnis erreicht wird.

Wenngleich beim Zusammenstecken respektive Aufbauen der Extruderschnecke ein hohes Maß an Präzision und Sorgfalt seitens der Bediener an den Tag gelegt wird, sind gleichwohl Steckfehler nicht grundsätzlich ausgeschlossen, da es sich um eine reine manuelle Tätigkeit handelt. Das Zusammenstecken der Extruderschnecken erfolgt z.B. auf einer Steckbank, wie sie exemplarisch in US 4 839 955 A beschrieben ist.

Aus DE 197 44 443 C1 ist eine Dosierschnecke oder einstückige Extruderschnecke bekannt, welche über eine Markierung am Schaft, von der Steuerung erkannt und in die Startfreigabeprozedur einbezogen werden kann. Der Erfindung liegt das Problem zugrunde, eine Möglichkeit anzugeben, die Sicherheit in Bezug auf den Aufbau einer solchen Steck-Extruderschnecke bietet. Zur Lösung dieses Problems vorgesehen ist erfindungsgemäß ein System zur Überprüfung des Aufbaus einer Extruderschnecke bestehend aus einer Welle und darauf nacheinander in definierter Reihenfolge aufzuschiebender oder aufgeschobener Schneckenelemente während oder nach dem Aufschieben der Schneckenelemente auf die Welle, umfassend eine Extruderschnecke bestehend aus einer Welle und den aufzuschiebenden oder aufgeschobenen Schneckenelementen, wobei jedes Schneckenelement eine elementspezifische äußere Geometrie aufweist, sowie umfassend eine Erfassungseinrichtung zur Ermittlung von Informationen betreffend die Reihenfolge der aufzuschiebenden oder aufgeschobenen Schneckenelemente und zum Vergleichen der ermittelten Informationen mit Soll-Informationen, die die Soll-Reihenfolge direkt oder indirekt beschreiben.

Die Erfindung schlägt mit besonderem Vorteil eine Prüfeinrichtung vor, die es ermöglicht, bereits während des Aufbaus der Extruderschnecke oder nach dem Aufbau der Extruderschnecke automatisiert zu prüfen, ob der laufende Aufbau oder der bereits erfolgte Aufbau korrekt ist, mithin also die definierte, vorgegebene Steckreihenfolge der einzelnen Schneckenelemente eingehalten ist oder nicht. Zu diesem Zweck ist eine Erfassungseinrichtung vorgesehen, die der Ermittlung von Informationen betreffend die Reihenfolge der während des Schneckenaufbaus aufzuschiebenden Schneckenelemente oder, im Falle der bereits fertigen Schnecke, bereits aufgeschobenen Schneckenelemente dient. Diese Informationen, die, worauf nachfolgend noch eingegangen wird, unterschiedlicher Natur sein können, betreffen also den Ist-Zustand der laufenden oder bereits beendeten Steck-Reihenfolge der Schneckenelemente. Die Erfassungseinrichtung ist nun des Weiteren zum Vergleich dieser ermittelten Informationen mit Soll-Informationen, die die Soll-Reihenfolge direkt oder je nach Art der Informationen auch indirekt beschreiben, ausgebildet. D. h., dass in einer entsprechenden Steuerungs- und Verarbeitungseinrichtung diese Soll-Informationen hinterlegt sind und als Vergleichsinformation herangezogen werden. Aus diesem Ist-Soll-Vergleich kann nun unmittelbar als Vergleichsergebnis erfasst werden, ob während des laufenden Steckprozesses ein aufzusteckendes Schneckenelement das Richtige ist, oder ob versehentlich ein falsches Schneckenelement aufgesteckt werden soll, bzw. im Falle einer fertig gesteckten Schnecke, ob dortseits die Reihenfolge korrekt ist, oder ob sich ein Steckfehler eingeschlichen hat. Selbstverständlich wird das entsprechende Vergleichsergebnis, sei es ein während des laufenden Steckvorgangs ermitteltes Vergleichsergebnis, sei es ein nach Abschluss des Aufsteckvorgangs ermitteltes Vergleichsergebnis, entsprechend ausgegeben, mithin also dem Bediener zur Kenntnis gebracht, so dass dieser umgehend reagieren und einen etwaigen Fehler beheben kann.

Die erfindungsgemäße Überprüfungseinrichtung lässt folglich eine hochgenaue Überprüfung der Steckreihenfolge zu und ist in der Lage, etwaige Steckfehler sofort zu erkennen und zu kommunizieren, so dass entweder ein sich anbahnender Steckfehler vermieden werden kann, respektive ein gegebener Steckfehler umgehend korrigiert werden kann.

Zur Erfassung von Informationen betreffend das jeweilige aufzuschiebende oder aufgeschobene Schneckenelement oder betreffend die aus den einzelnen Schneckenelementen definierte Ist-Geometrie der fertiggesteckten Extruderschnecke ist seitens der Erfassungseinrichtung bevorzugt ein Sensormittel vorgesehen, wobei ferner eine Steuerungs- und Verarbeitungseinrichtung zum Vergleichen der erfassten Informationen mit den Soll-Informationen, die die Reihenfolge der nacheinander aufzuschiebenden oder aufgeschobenen Schneckenelemente oder die Soll-Geometrie der Extruderschnecke beschreiben, vorgesehen ist. Das erfindungsgemäß vorgesehene Sensormittel ist also in der Lage, entweder schneckenelementspezifische Informationen zu erfassen, oder Ist-Geometrie-Informationen bezüglich der fertiggesteckten Extruderschnecke. Je nachdem, welcher Art die vom Sensormittel erfassten Informationen sind, ist die eingebundene Steuerungs- und Verarbeitungseinrichtung zum entsprechenden Vergleich mit Soll-Informationen, also ebenfalls entsprechenden elementspezifischen Informationen oder Soll-Geometrie-Informationen, ausgebildet. Ein entsprechender unmittelbarer Vergleich ist damit möglich.

Bevorzugt sind das Sensormittel und die Extruderschnecke oder die aufzuschiebenden Schneckenelemente relativ zueinander bewegbar. D. h., dass entweder ein feststehendes Sensormittel vorgesehen ist, an dem die einzelnen aufzuschiebenden Schneckenelemente oder die fertig gesteckte Extruderschnecke vorbeibewegt wird. Alternativ dazu ist es auch denkbar, ein bewegliches Sensormittel vorzusehen, das beispielsweise relativ zur fertiggesteckten Extruderschnecke bewegt wird, um diese abzutasten.

Gemäß einer ersten Erfindungsalternative kann jedes Schneckenelement einen elementspezifischen Transponder aufweisen, wobei das Sensormittel eine Leseeinrichtung zum Erfassen der Transponderinformation ist. In jedem elementspezifischen Transponder ist eine elementspezifische Information hinterlegt, die das Schneckenelement identifiziert. Mittels einer Leseeinrichtung kann nun diese elementspezifische Transponderinformation erfasst werden. In der Steuerungs- und Verarbeitungseinrichtung sind entsprechende elementspezifische Soll-Informationen hinterlegt, derart, dass über diese die entsprechende, definierte Soll-Reihenfolge bestimmt ist. Die Steuerungseinrichtung kann nun anhand der erfassten Transponderinformation sofort erkennen, ob es sich bei dem erfassten Schneckenelement um ein Schneckenelement handelt, das gemäß der Soll-Reihenfolge positionsgerecht aufgesteckt wird oder ist, oder ob anstelle des erfassten Schneckenelements ein anderes Schneckenelement positioniert hätte sein sollen.

Dabei kann, wenn eine fertiggesteckte Schnecke überprüft wird, die Leseeinrichtung entlang der Extruderschnecke verfahren, so dass sie an allen Schneckenelementen entlangfährt und deren einzelne Transponderinformationen erfasst. Entweder kann bereits parallel dazu der jeweilige Vergleich mit den hinterlegten elementspezifischen Soll-Informationen erfolgen, so dass die Leseeinrichtung beispielsweise bei Erfassen eines Fehlers unmittelbar an der Fehlstelle, also der Position, wo ein fehlerhaft gestecktes Schneckenelement ist, stoppt. Alternativ kann die Leseeinrichtung auch entlang der gesamten Schneckenwelle verfahren und ein "Informationsprofil" aufnehmen, mithin also alle Transponderinformationen auslesen und das gesamte Informationspaket zum Soll-Vergleich übertragen.

Eine Alternative hierzu sieht vor, die Transponderinformation bereits beim Aufstecken zu erfassen und unmittelbar den Vergleich vorzunehmen, so dass ein anstehender Aufsteckvorgang bereits durch entsprechende Alarmsignalgabe im Falle eines sich anbahnenden Fehlers unterbunden werden kann. Hierzu ist zweckmäßigerweise der Transponder an einer Stirnfläche oder einer Mantelfläche einer Bohrung des jeweiligen Schneckenelements angeordnet, wobei die Leseeinrichtung an einem an der Welle lösbar anzuordnenden Träger angeordnet ist. Die Schneckenelemente werden stets an einem definierten Ende der Welle aufgesteckt. In diesem Bereich ist entweder an der Welle selbst oder benachbart dazu die Leseeinrichtung angeordnet. Der Transponder befindet sich entweder an der vorderen, also zur Welle geführten Stirnfläche des Schneckenelements, oder im Bereich der Elementbohrung, wo die Verzahnung ausgebildet ist. In jedem Fall gelangt der Transponder zwingend in den Lesebereich der Leseeinrichtung, so dass die Transponderinformation erfasst werden kann. Nähert sich also ein Schneckenelement der beispielsweise an der Welle selbst über den Träger befestigten Leseeinrichtung, so wird die Transponderinformation erfasst und unmittelbar verglichen. Im Falle eines falschen Schneckenelements kann sofort ein Alarmsignal gegeben werden, so dass das Schneckenelement erst gar nicht aufgesteckt wird. Dabei kann die Leseeinrichtung quasi axial positioniert sein, mithin also eine direkte Kommunikationsverbindung zum stirnflächenseitigen Transponder aufbauen, oder radial angeordnet sein, so dass eine Kommunikationsverbindung zum ebenfalls radial in der Innenbohrung angeordneten Transponder gegeben ist.

Alternativ zur Erfassung der Transponderinformationen während des Aufsteckens ist es auch denkbar, die Transponderinformation an der gesteckten Extruderschnecke zu erfassen, wenn diese in den Extruder eingeführt wird. Hierzu ist die Leseeinrichtung an dem Extruder selbst, gegebenenfalls lösbar, angeordnet, derart, dass die Transponderinformation automatisch beim Einschieben der Extruderschnecke in den Extruder erfassbar ist. D. h., dass am Austragsende des Verfahrensteils, also des Zylinders, die Leseeinrichtung über einen entsprechenden Träger montiert wird. Da von dieser Seite her auch die Extruderschnecke eingeschoben wird, gelangen zwangsläufig sämtliche Transponder während der Einschiebebewegung in den Lesebereich der Leseeinrichtung, ihre Informationen können erfasst und verglichen werden. Kommt es zur Erfassung eines Fehlers, so kann die weitere Einschiebebewegung unmittelbar gestoppt, die Schnecke erneut gezogen und wieder abgerüstet werden, um den Fehler auszuräumen.

Die zuvor beschriebene Alternative sieht eine Informationserfassung auf Transponderbasis vor. Alternativ hierzu kann das Sensormittel ein optisches Sensormittel sein, mit dem die Ist-Geometrie beschreibende Informationen der Extruderschnecke erfassbar sind. Über ein solches optisches Sensormittel wird folglich eine Konturerfassung vorgenommen, also die tatsächliche äußere Extruderschneckengeometrie ermittelt und der nachfolgenden Analyse respektive dem Vergleich unterworfen. Auch hier sind unterschiedliche Ausgestaltungen respektive unterschiedliche optische Sensormittel verwendbar.

Nach einer ersten Erfindungsalternative kann als Sensormittel ein Laser verwendet werden, mit dem die Oberfläche der Extruderschnecke zur Erfassung des Höhenprofils entlang einer Linie abgetastet wird, wobei das Höhenprofil seitens der Steuerungs- und Verarbeitungseinrichtung ausgewertet wird. Jedes Schneckenelement weist eine seine Funktion definierende Außengeometrie auf. Mit dem Laser wird entlang der Schnecke verfahren, so dass ein Höhenprofil abgetastet wird. In der Steuerungs- und Verarbeitungseinrichtung ist ein Vergleichsprofil hinterlegt, das mit dem Ist-Höhenprofil verglichen wird, worüber entsprechende Steckfehler erfasst werden können.

Diese Erfindungsausgestaltung ermöglicht darüber hinaus nicht nur die Erfassung etwaiger reihenfolgemäßiger Steckfehler, sondern auch von Orientierungsfehlern. Wie einleitend beschrieben weist die Schneckenwelle eine äußere Verzahnung und jedes Schneckenelement eine innere Verzahnung auf. Die Schneckenelemente sind nun nicht nur in der korrekten Reihenfolge aufzustecken, sondern auch in der korrekten Winkelposition. Denn insbesondere bei Doppelschneckenextrudern kämmen beide Extruderschnecken miteinander, so dass auch die entsprechenden Schneckenelemente während des Einsetzens der Extruderschnecken in einer definierten Winkelposition sein müssen, um einen korrekten Welleneingriff zu ermöglichen. Hieraus resultiert, dass das erfasste Ist-Höhenprofil winkelabhängig ist. Ein Förderelement beispielsweise, das eine äußere Schraubengeometrie aufweist, verändert in Bezug auf die positionsfeste Abtastlinie natürlich das entsprechende Höhenprofil, wenn das Schneckenelement in unterschiedlichen Winkelstellungen aufgesteckt wird. Der "Steckplan" gibt nun dem Bediener nicht nur die Reihenfolge vor, sondern auch die entsprechende Winkelstellung, in der das jeweilige Steckelement aufzuschieben ist. Auch das in der Steuerungseinrichtung hinterlegte Vergleichsprofil ist in Bezug auf die vorgegebene, definierte Winkellage ausgelegt. Damit können zwangsläufig nicht nur Steckfehler, sondern eben auch entsprechende Winkelfehler genau erfasst werden.

Alternativ zur Verwendung eines Lasers kann als optisches Sensormittel auch eine Kamera verwendet werden, die Bilder der Extruderschnecke aufnimmt, die, insbesondere seitens der Steuerungs- und Verarbeitungseinrichtung, zur Ermittlung der Informationen zur Ist-Geometrie verarbeitet werden. Auch mit einer Kamera, die entweder Einzelbilder oder eine Videosequenz aufnimmt, kann die Ist-Geometrie erfasst werden. Denn in den Oberflächenbildern sind die einzelnen Oberflächen der Schneckenelemente sichtbar. Seitens der Kamera oder gegebenenfalls der Steuerungs- und Verarbeitungseinrichtung werden nun innerhalb der Kamerabilder die entsprechenden Geometrieinformationen analysiert, wozu entsprechende Analyse- und Detektionsalgorithmen verwendet werden. Beispielsweise werden Kantendetektionsalgorithmen verwendet, um in den Bildern die entsprechenden Kanten der Elementgeometrien zu ermitteln. Ein Förderelement weist wie beschrieben ein schraubenförmige gewundene Kantenstruktur auf, während ein Knetelement, das üblicherweise aus mehreren hintereinander angeordneten und um definierte Winkelmaße versetzte eiförmige Knetteile aufweist, wiederum eine andere spezifische Kantengeometrie aufweist, was ohne Weiteres in den entsprechenden Kamerabildern durch geeignete Verarbeitungssoftware analysierbar ist. Wiederum wird die sich hieraus ergebende Ist-Geometrieinformation mit einer entsprechenden Vergleichsinformation verglichen, um ein Prüfergebnis zu ermitteln. Auch hier ist selbstverständlich eine Erfassung etwaiger Winkellagenfehler möglich. Denn eine beispielsweise um einen Zahneingriff verdrehte Montage eines Schneckenelements führt zwangsläufig zu einem wenngleich geringen, so dennoch analysier- respektive erfassbaren Versatz der Kantengeometrie, was wiederum während des Vergleichs als Fehler erfasst wird.

Kommt eine Einzelbildkamera zum Einsatz, so bewegt diese sich beispielsweise schrittweise entlang der gesteckten Extruderschnecke und nimmt mehrere, beispielsweise 3 - 5 Einzelbilder auf. Seitens der Kamera oder der Steuerungs- und Verarbeitungseinrichtung werden nun diese Einzelbilder zu einem Gesamtbild zusammengefügt, mithin also randseitig entsprechend überlagert, so dass die Bilder positionsgenau ein Gesamtbild ergeben. Selbstverständlich könnte auch jedes Abschnittsbild einzeln analysiert und verglichen werden. Im Falle einer Videokamera wird die gesamte aus einer Vielzahl von Einzelbildern bestehende Videosequenz der Bild- respektive Kantenanalyse unterworfen und anschließend hierauf gestützt der Vergleich vorgenommen.

Ein solcher Laser oder eine Kamera kann z. B. auch am Extruder selbst, dort am Verfahrensteil, also dem Zylinder, am Austragende angeordnet sein. Damit kann die Extruderschnecke beim Einschieben in den Zylinder erfasst und überprüft werden, und bei Vorliegen eines Fehlers sofort wieder gezogen und korrekt aufgebaut werden.

Eine dritte Alternative bezüglich eines verwendbaren Sensormittels sieht vor, als ein solches eine Linienlichtquelle und einen Linienlichtsensor zu verwenden, wobei beide einander gegenüberliegend an unterschiedlichen Seiten der Extruderschnecke angeordnet sind, derart, dass seitens des Linienlichtsensor ein Schattenbild des sich dazwischen befindlichen Bereichs der Extruderschnecke aufgenommen wird, wobei das Schattenbild, insbesondere seitens der Steuerungs- und Verarbeitungseinrichtung, zur Ermittlung der Informationen zur Ist-Geometrie ausgewertet wird. Auch aus diesem Schattenbild, das in seiner konkreten Kontur ebenfalls winkelabhängig ist, kann ebenfalls durch eine geeignete Verarbeitungssoftware, insbesondere eine Kantenanalyse, die konkrete Ist-Geometrie der Schnecke erfasst werden und entweder seitens des Linienlichtsensors selbst oder seitens der Steuerungs- und Verarbeitungseinrichtung mit entsprechenden Soll-Informationen verglichen werden. D. h., dass auch aus dem Schattenbild nicht nur eine Information in Bezug auf die Steckposition in axialer Richtung erfasst wird, sondern auch Winkellageninformation, so dass sowohl axiale als auch winkelmäßige Steckfehler erfasst werden können.

In Weiterbildung der Erfindung kann ferner an der Welle ein Speicherelement, insbesondere ein Transponder vorgesehen sein, wobei die erfindungsgemäße Einrichtung eine Schreibeinrichtung aufweist, mittels der Informationen betreffend die Ist-Reihenfolge der aufgeschobenen Schneckenelemente im Speicherelement der Welle einschreibbar sind. Dieses Speicherelement trägt folglich eine entsprechende Information über die Steckreihenfolge der Schneckenelemente. Es ist bevorzugt am Wellenschaft im Bereich des mit dem Getriebe zu koppelnden Schaftendes angeordnet. Ist nun am Extruder ein entsprechende Leseeinrichtung, beispielsweise ein Transponderleser, angeordnet, so kann beim Einstecken der Extruderschnecke diese Reihenfolgeinformation ausgelesen werden und der Steuerungs- und Verarbeitungseinrichtung des Extruders gegeben werden. Dortseits kann ein Vergleich der Ist-Reihenfolge mit einer Soll-Reihenfolge, die zu dem Arbeitsverfahren, das mit dem Extruder durchgeführt werden soll, definiert ist, erfolgen. Es wird also überprüft, ob die Ist-Steckreihenfolge in Bezug auf das beabsichtigte Arbeitsverfahren korrekt ist. Erst wenn dieser Vergleich positiv ausfällt, kann die Steuerungseinrichtung den Extruderbetrieb freischalten.

Die Steuerungs- und Verarbeitungseinrichtung, die dem erfindungsgemäßen System zugehörig ist, kann als separate Einrichtung arbeiten, mithin also nur der Schneckenüberprüfung dienen. Zweckmäßig ist es jedoch, wenn Steuerungs- und Verarbeitungseinrichtung Teil des Extruders selbst ist, in den die Extruderschnecke einzusetzen ist, die also mithin auch den Extruder selbst steuert.

Neben dem erfindungsgemäßen System betrifft die Erfindung ferner ein Verfahren zur Überprüfung des Aufbaus einer Extruderschnecke bestehend aus einer Welle und darauf nacheinander in definierter Reihenfolge aufzuschiebenden oder aufgeschobenen Schneckenelementen, wobei jedes Schneckenelement eine elementspezifische Geometrie aufweist. Das erfindungsgemäße Verfahren zeichnet sich dadurch aus, dass mit einer Erfassungseinrichtung Informationen betreffend die Reihenfolge der aufzuschiebenden oder aufgeschobenen Schneckenelemente ermittelt und mit Sollinformationen, die die Soll-Reihenfolge direkt oder indirekt beschreiben, verglichen werden, wobei in Abhängigkeit des Vergleichsergebnisses eine Überprüfungsinformation ausgegeben wird.

Die verwendete Erfassungseinrichtung umfasst ein Sensormittel, mit dem Informationen betreffend das jeweilige aufzuschiebende oder aufgeschobene Schneckenelement oder betreffend die aus den einzelnen Schneckenelementen definierte Ist-Geometrie der Extruderschnecke erfasst werden, wobei mit einer Steuerungs- und Verarbeitungseinrichtung die erfassten Informationen mit Soll-Informationen, die die Reihenfolge der nacheinander aufzuschiebenden oder aufgeschobenen Schneckenelemente oder die Soll-Geometrie der Extruderschnecke beschreiben, verglichen werden.

Das Sensormittel und die Extruderschnecke respektive die aufzuschiebenden Schneckenelemente werden dabei zur Ermittlung der Informationen relativ zueinander bewegt.

Als Sensormittel können unterschiedliche Gerätschaften verwendet werden. Nach einer ersten Erfindungsausgestaltung wird eine Leseeinrichtung, insbesondere einen Transponderleser verwendet, mit der als Information die Transponderinformation eines an dem jeweiligen Schneckenelement angeordneten elementspezifischen Transponders erfasst wird, wobei diese Leseeinrichtung entweder an einem Wellenende angeordnet oder diesem zugeordnet sein kann, oder an einem die Extruderschnecke selbst aufnehmenden Extruder.

Alternativ zu einer Transponderinformationserfassung ist es auch denkbar, als Sensormittel ein optisches Sensormittel, mit dem die Ist-Geometrie beschreibende Informationen der Extruderschnecke erfasst werden, verwendbar. Ein solches Sensormittel kann ein Laser, eine Kamera oder eine Kombination aus Linienlichtquelle und Linienlichtsensor sein. Alle optischen Sensormittel lassen sie Erfassung von Geometrieinformationen zu, die sowohl axiale Steckfehler als auch Winkellagenfehler ermitteln lassen.

Weitere Ausgestaltungen des erfindungsgemäßen Verfahrens sind den entsprechenden Unteransprüchen zu entnehmen.

Schließlich betrifft die Erfindung ferner eine Extruderschnecke, umfassend eine Welle und mehrere auf diese aufschiebbare Schneckenelemente, die geeignet ist, im Rahmen eines Verfahrens, bei dem als Informationen betreffend die Steckreihenfolge entsprechende Transponderinformationen aufgenommen werden, verwendet zu werden. Diese Extruderschnecke respektive die auf die Welle aufzuschiebenden Schneckenelemente zeichnen sich dadurch aus, dass an jedem Schneckenelement ein elementspezifischer Transponder angeordnet ist. Dieser Transponder ist entweder an einer Stirnfläche des Schneckenelements oder einer Mantelfläche einer Bohrung des jeweiligen Schneckenelements, also im Bereich der Verzahnung des Elements, angeordnet. Er liegt also jeweils an einer Position, die eine gute Kommunikationsverbindung zu einem entsprechenden Transponderleser, der entweder an der einleitend beschriebenen Prüfungseinrichtung oder am Extruder selbst angeordnet ist, ermöglicht.

Weitere Vorteile, Merkmale und Einzelheiten der Erfindung ergeben sich aus dem im Folgenden beschriebenen Ausführungsbeispiel sowie anhand der Zeichnung. Dabei zeigen:
- Fig. 1: eine Prinzipdarstellung einer erfindungsgemäßen Überprüfungseinrichtung einer ersten Ausführungsform auf Basis einer Transpondererfassung,
- Fig. 2: eine Prinzipdarstellung einer erfindungsgemäßen Überprüfungseinrichtung einer zweiten Ausführungsform auf Basis einer Transpondererfassung,
- Fig. 3: eine Prinzipdarstellung einer erfindungsgemäßen Überprüfungseinrichtung einer dritten Ausführungsform auf Basis einer Transpondererfassung,
- Fig. 4: eine Prinzipdarstellung einer erfindungsgemäßen Überprüfungseinrichtung einer vierten Ausführungsform auf Basis eines längsbeweglichen Sensormittels,
- Fig. 5: eine Prinzipdarstellung von aufgenommenen Ist-Informationen und zu Vergleichszwecken dienende Soll-Informationen bei Verwendung eines Höhenprofil erstellenden Sensormittels, und
- Fig. 6: eine Prinzipdarstellung von in Form eines oder mehrerer Bilder aufgenommenen Ist-Informationen und entsprechende, Vergleichszwecken dienende Soll-Informationen bei Verwendung eines bilderaufnehmenden Sensormittels.

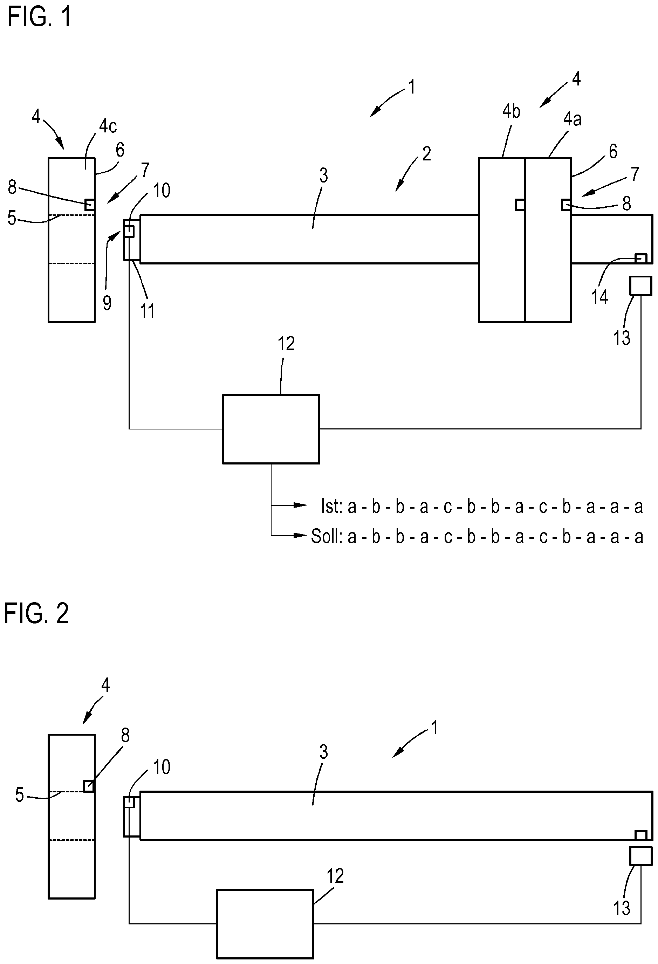

Fig. 1 zeigt ein erfindungsgemäßes System 1 zur Überprüfung des Aufbaus einer Extruderschnecke 2. Die Extruderschnecke 2 besteht aus einer Welle 3, auf die in quasi beliebiger Reihenfolge Schneckenelemente 4 aufgeschoben werden können. Die Welle weist eine Außenverzahnung auf, jedes Schneckenelement 4 im Bereich seiner Bohrung 5 eine entsprechende Innenverzahnung, wobei Außenverzahnung und Innenverzahnung ineinander eingreifen, so dass eine drehfeste Verbindung erzeugt wird. Der grundsätzliche Aufbau derartiger Steck-Extruderschnecken ist hinlänglich bekannt.

Bei dem erfindungsgemäßen System 1 weist jedes Schneckenelement 4 an seiner Stirnfläche 6 ein Speicherelement 7, hier in Form eines Transponders 8 auf. Jeder Transponder 8 enthält eine gespeicherte Information, die das jeweilige Schneckenelement 4 identifiziert.

Üblicherweise werden grundsätzlich drei unterschiedliche Schneckenelementfamilien unterschieden, nämlich zum einen Förderelemente, daneben Mischelemente und schließlich Zoningelemente. Förderelemente dienen dazu, das Material zu fördern, es also beispielsweise einzuziehen oder an etwaigen Zylinderöffnungen vorbeizuführen, sowie durch Mischelemente und eine nachgeschaltete Düse oder Ähnliches hindurch zu fördern. Mischelemente dienen dazu, das Material zu dispergieren und/oder distributiv zu bearbeiten. Es kann sich beispielsweise um Knetelemente oder Ähnliches handeln. Zoningelemente schließlich isolieren zwei verschiedene Verfahrensbereiche im Extruderzylinder voneinander. Sie ermöglichen beispielsweise eine Abdichtung des Knetbereichs und einer Entlüftungszone und Ähnlichem.

Der Transponder 8 definiert nun, ob es sich bei dem jeweiligen Schneckenelement um ein Förder-, Misch- oder Zoningelement handelt, wobei natürlich innerhalb der jeweiligen Elementfamilien unterschiedliche Elemente, die einem vergleichbaren Zweck dienen, gegeben sind.

An der Spitze der Welle 3 befindet sich eine Leseeinrichtung 9, hier ein Transponderleser 10, der an einem entsprechenden Träger 11 angeordnet ist, der lösbar an der Welle 3 befestigt werden kann. Der Transponderleser 10 ist axial ausgerichtet, so dass ein aufzuschiebendes Schneckenelement 4 zwangsläufig mit seinem Transponder 8 an der vorderen Stirnfläche 6 in Richtung des Transponderlesers 9 bewegt wird. Hierbei kommt es zu einer entsprechenden Kommunikation zwischen Transponder 8 und Transponderleser 10, der die Transponderinformation hierbei unmittelbar auslesen kann.

Das System 1 umfasst ferner eine Steuerungs- und Verarbeitungseinrichtung 12, der die ausgelesene Transponderinformation gegeben wird. Diese Steuerungs- und Verarbeitungseinrichtung 12 ist nun in der Lage, einerseits anhand sämtlicher der Reihe nach aufgenommenen Transponderinformationen eine Ist-Information, die die Reihenfolge der nacheinander aufgeschobenen Schneckenelemente 4 beschreibt, zu erstellen. Zum anderen ist sie dazu ausgelegt, diese Ist-Information mit einer ihr vorliegenden Soll-Information, die definiert, wie die richtige Steckreihenfolge der aufzubauenden Extruderschnecke 2 aussieht, zu vergleichen. In Abhängigkeit des Vergleichsergebnisses wird sodann entschieden, ob die Extruderschnecke 2 korrekt aufgebaut wurde, oder ob ein Steckfehler gegeben ist. Selbstverständlich kann ein entsprechender Vergleich auch kontinuierlich erfolgen, so dass nicht erst bis zum Aufschieben des letzten Schneckenelements mit dem Vergleich gewartet werden muss. Vielmehr kann mit jedem erfassten, neu aufzuschiebenden Schneckenelement 4 sogleich über den Vergleich erfasst werden, ob es das richtige Schneckenelement ist, oder ob ein Fehler ansteht.

Die Steuerungs- und Verarbeitungseinrichtung 12 kommuniziert des Weiteren mit einer Schreibeinrichtung 13, die dazu dient, die endgültige Ist-Information, die die Ist-Reihenfolge der aufgesteckten Schneckenelemente 4 beschreibt, in einem Speicher 14, der im Bereich des getriebeseitig anzubindenden Endes der Welle 3 angeordnet ist, einzuschreiben. Bei dem Speicherelement 14 kann es sich beispielsweise wiederum um einen Transponder oder Ähnliches handeln. Hierüber wird also der fertigen Extruderschnecke 2 eine Information aufgeprägt, die die Ist-Reihenfolge der aufgesteckten Schneckenelemente beschreibt. Wird nun diese Extruderschnecke in einem Extruder verbaut, also in den Zylinder eingeschoben, so kann mit einer geeigneten Leseeinrichtung, die mit der Steuerungs- und Verarbeitungseinrichtung des Extruders gekoppelt ist, die Ist-Reihenfolgeninformation des Speicherelements 14 ausgelesen werden und mit einer dort hinterlegten Information, die angibt, welcher Schneckentyp respektive welcher Schneckenaufbau für das nachfolgend durchzuführende Verfahren benötigt wird, verglichen werden. Hier erfolgt also nochmals ein Vergleich, ob diese aufgebaute Schnecke schlussendlich für das extruderseitig durchzuführende Arbeitsverfahren auch die Richtige ist.

Im gezeigten Ausführungsbeispiel sind exemplarisch zwei Schneckenelemente 4a und 4b bereits auf die Welle 3 aufgeschoben worden. Im nächsten Schritt wird das Schneckenelemente 4c aufgeschoben. Es befindet sich mit seinem Transponder 8 im Auslesebereich der Transponderleseeinrichtung 10, so dass die Transponderinformation erfasst wird. Sie kann sogleich in der Steuerungseinrichtung 12 mit der Soll-Information verglichen werden. Ergibt der Vergleich, dass es das richtige Schneckenelement 4c ist, das also definitionsgemäß aufgeschoben werden muss, so wird beispielsweise ein grünes Leuchtsignal gezeigt, das angibt, dass es das richtige Schneckenelement ist. Ist es nicht das richtige Schneckenelement, so kann ein rotes Leuchtsignal, das einen Fehler anzeigt, ausgegeben werden.

Lediglich exemplarisch ist in Fig. 1 ein Beispiel für eine Steckreihenfolge angegeben. Die obere Zeile, gekennzeichnet mit "Ist", gibt die erfasste Ist-Reihenfolge an. Die darunter befindliche, mit "Soll" gekennzeichnete Zeile ergibt die Soll-Reihenfolge an. Im gezeigten Beispiel sei angenommen, dass drei Schneckenelementtypen a, b und c aufgesteckt werden, wobei es sich beim Element a um ein Förderelement, beim Element b um ein Mischelement und beim Element c um ein Zoningelement handelt. Ersichtlich stimmt bei diesem Ausführungsbeispiel die Ist-Information, also die gesteckte Ist-Reihenfolge, mit der Soll-Information, also der Soll-Reihenfolge überein, die Extruderschnecke 2 ist korrekt aufgebaut.

Fig. 2 zeigt eine alternative Ausführung eines Systems 1, die insoweit der Ausführungsform aus Fig. 1 entspricht. Auch dieses System arbeitet mit einer Transponderinformationserfassung, wobei am jeweiligen Schneckenelement 4 wiederum ein Transponder 8 angeordnet ist, während stirnseitig an der Welle 3 eine Transponderleseeinrichtung 10 angeordnet ist. Bei dieser Ausgestaltung jedoch befindet sich der Transponder 8 in der Bohrung 5 des Schneckenelements 4, ist also nicht axial gerichtet, sondern radial. Dem folgend ist auch die Transponderleseeinrichtung 10 hier radial ausgerichtet, so dass beim Aufschieben des Schneckenelements 4 auf die Welle 3 der Transponder automatisch in den Erfassungsbereich der Transponderleseeinrichtung 10 gelangt. Ansonsten ist die Funktion der in Fig. 2 gezeigten System 1 die gleiche wie die der Einrichtung 1 aus Fig. 1.

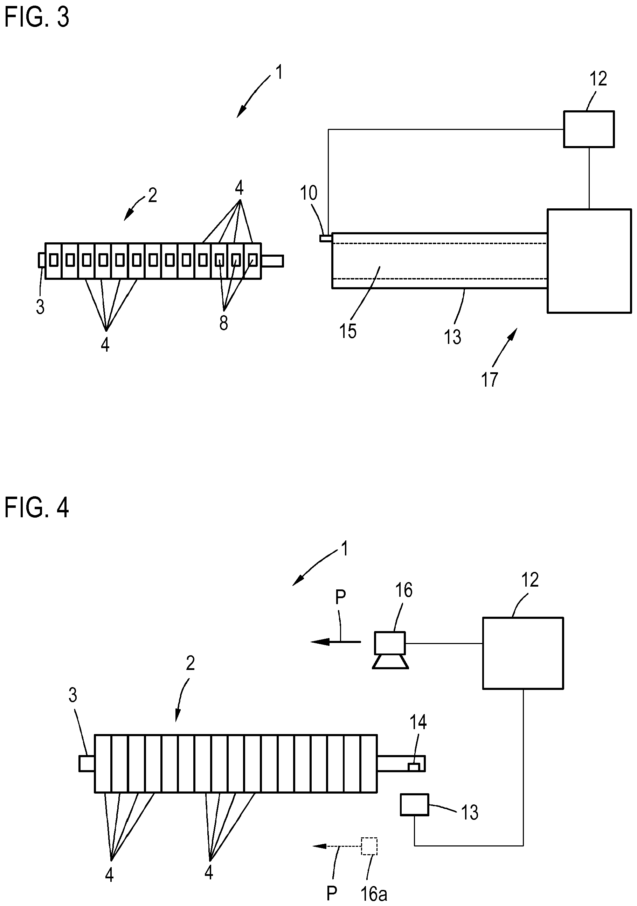

Fig. 3 zeigt eine Prinzipdarstellung einer weiteren Ausführungsform eines erfindungsgemäßen Systems 1 zur Überprüfung des Schneckenelementaufbaus. Bei dieser Erfindungsausgestaltung ist die Extruderschnecke 2 bereits fertig aufgebaut, d. h., dass auf der Welle 3 bereits eine Vielzahl einzelner Schneckenelemente 4 aufgesteckt sind. Wiederum weist jedes Schneckenelement 4 einen Transponder 8 auf, die hier nur exemplarisch angedeutet sind.

Hier erfolgt die Überprüfung der fertiggesteckten Extruderschnecke 2 in dem Moment, in dem die Extruderschnecke 2 in den Zylinder 13 des Extruders 17 eingeschoben wird, der in Fig. 3 exemplarisch dargestellt ist. Der Zylinder 13 weist in an sich bekannter Weise eine Zylinderbohrung 15 auf, beispielsweise ausgeführt als Brillenbohrung zur Aufnahme zweier Extruderschnecken 2, die zur Bildung eines Doppelschneckenextruders miteinander kämmen. Es kann aber auch nur eine einzelne Bohrung vorgesehen sein. Eingangsseitig der Bohrung 15 ist hier die Transponderleseeinrichtung 10 angeordnet. Während des Einschiebens wird die Extruderschnecke 2 zwangsläufig an der feststehenden Transponderleseeinrichtung 10 vorbeigeschoben, so dass jeder Transponder 8 zwangsläufig an der Transponderleseeinrichtung 10 vorbeigeführt wird und ausgelesen werden kann. Die Transponderleseeinrichtung 10 kommuniziert hier mit der Steuerungs- und Verarbeitungseinrichtung 12, die hier jedoch gleichzeitig den gesamten Betrieb des Extruders 17 scheuert, mithin also auch die eigentliche Überprüfung der Steck-Reihenfolge der Extruderschnecke 2 vornimmt. Auch hier kann der Vergleich der gerade ausgelesenen Ist-Informationen mit der seitens der Steuerungs- und Verarbeitungseinrichtung 12 hinterlegten Soll-Information kontinuierlich erfolgen, mithin also mit jeder einzelnen Transponderinformationserfassung. Wird ein Fehler erkannt, so kann unmittelbar ein optisches oder akustisches Alarmsignal ausgegeben werden, so dass die Extruderschnecke 2 gar nicht erst komplett eingeschoben wird. Ist jedoch die Reihenfolge in Ordnung, so kann die Extruderschnecke 2 komplett eingeschoben werden. Der Extruder 17 kann seinen Betrieb aufnehmen.

Fig. 4 zeigt schließlich eine weitere Ausführungsform eines erfindungsgemäßen Systems 1 zur Überprüfung einer Extruderschnecke 2, wobei bei diesem Ausführungsbeispiel die Extruderschnecke 2 ebenfalls bereits fertig aufgebaut ist, d. h., dass auf die Welle 3 sämtliche Schneckenelemente 4 aufgeschoben sind. Die Extruderschnecke 2, die an einem entsprechenden Halter oder dergleichen positionsfest fixiert ist, wird nun mit Hilfe eines Sensormittels 16, das, wie durch den Pfeil P dargestellt ist, axial längs der Extruderschnecke 2 verfahrbar ist, abgetastet, um Ist-Informationen betreffend die Ist-Geometrie der Extruderschnecke 2 zu erhalten. Jede Extruderschnecke 2 ist in ihrer äußeren Geometrie von den verwendeten und in einer entsprechenden Reihenfolge aufgesteckten Schneckenelemente 4 abhängig. D. h., dass sich zwangsläufig die Außengeometrie der Extruderschnecke 2 ändert, wenn Schneckenelemente 4 beispielsweise vertauscht angeordnet werden, oder, nachdem die Außenverzahnung der Welle 3 in die Innenverzahnung der Schneckenelemente 4 eingreift, wenn ein Schneckenelement 4 nicht in der richtigen Winkellag, also um die Wellenachse verdreht, aufgesteckt ist. Dies alles führt zwangsläufig zu einer Veränderung der Außengeometrie, die bei Vertauschung der Steckreihenfolge natürlich gravierender ist, als bei einer verdrehten Winkellage, wenn also beispielsweise ein Schneckenelement nur um einen Zahneingriff versetzt aufgesteckt ist. Jedoch kann bereits eine solche auch geringe Abweichung der Außengeometrie von der Soll-Geometrie mit der erfindungsgemäßen Einrichtung 1 erfasst werden.

Zu diesem Zweck bewegt sich das Sensormittel 16 entlang des Pfeils P entlang der Extruderschnecke 2, die in einer definierten Winkellage an dem hier nicht näher gezeigten Halter angeordnet ist. Je nachdem, wie nun das Sensormittel 16 ausgelegt ist respektive arbeitet, werden entsprechende Ist-Informationen betreffende Außengeometrie erfasst. In der Steuerungs- und Verarbeitungseinrichtung 12 werden diese Ist-Informationen nun mit Soll-Informationen verglichen, in Abhängigkeit des Vergleichsergebnisses wird sodann befunden, ob die Extruderschnecke 2 korrekt aufgebaut ist, oder ob ein Fehler vorliegt. Dieser Fehler kann sogar lokal aufgelöst angezeigt werden, so dass der Bediener unmittelbar Kenntnis erhält, wo der Fehler ist, welches Schneckenelement 4 also auszutauschen oder zu verdrehen ist. Hierzu ist der Steuerungseinrichtung 12 natürlich ein entsprechendes Anzeigemittel wie ein Display oder Ähnliches, über das auch eine etwaige Signalgabe erfolgen kann und Ähnliches zugeordnet.

Zugeordnet ist des Weiteren wiederum die Schreibeinrichtung 13, die es ermöglicht, in das Speicherelement 14 entsprechende Informationen einzuspeichern.

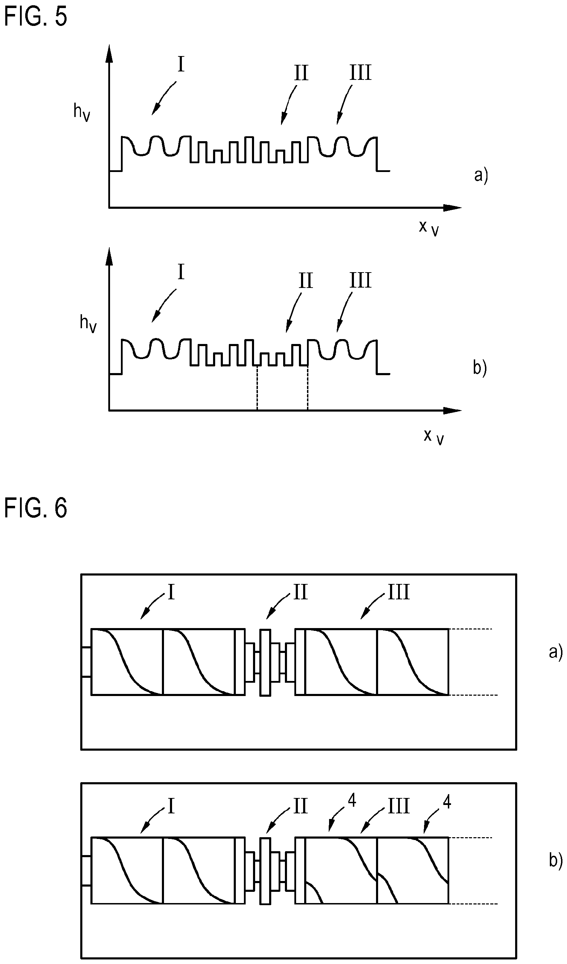

Bei dem Sensormittel 16 kann es sich beispielsweise um einen Laser handeln, der mit einem scharfen Strahl die Oberfläche der Extruderschnecke 2 längs einer definierten Linie abtastet und mit dessen Informationen ein Höhenprofil längs der abgetasteten Linie erstellt werden kann. Ein Beispiel eines solchen abgetasteten Höhenprofils ist in Fig. 5, dort der oberen, mit a) gekennzeichneten Diagramm dargestellt. Längs der Abszisse ist mit x der Verfahrweg, also die Position aufgetragen, längs der Ordinate mit h die jeweilige Höhe. Ersichtlich ergibt sich ein ganz charakteristisches Höhenprofil, das im gezeigten Beispiel drei Zonen I, II und III unterscheiden lässt. Die Zonen I und III werden beispielsweise von Förderelementen, die schraubenförmige Außengeometrien aufweisen, definiert, während die Zone 2 von Misch- oder Knetelementen definiert wird, die in an sich bekannter Weise beispielsweise eiförmige Knetscheiben, die um die Längsachse um ein definiertes Winkelmaß versetzt angeordnet sind, aufweisen, so dass sich das in der Zone II gezeigte Stufenprofil ausbildet.

Fig. 5a) zeigt das aufgenommene Ist-Profil, also die aufgenommene Ist-Information, während Fig. 5b) das Soll-Profil, also die Vergleichszwecken dienende Soll-Information zeigt. Aufgetragen ist wiederum längs der Abszisse der Weg x_{V}, und längs der Ordinate das Höhenprofil h_{V}. Wiederum werden die Abschnitte I, II und III unterschieden, wobei ersichtlich die Abschnitt I und III in beiden Teilfiguren a) und b) identisch sind, so dass dortseits kein Fehler gegeben ist.

Im Teilbereich II jedoch ist ersichtlich eine Profilabweichung festzustellen. Während im linken Bereich des gestuften Abschnitts II die beiden Profile noch übereinstimmen, kommt es im Bereich zwischen den beiden gestrichelten Vertikallinien zu einer deutlichen Profilabweichung, die darauf zurückzuführen ist, dass dort zwar ein Misch- oder Knetelement verbaut ist, dieses jedoch beispielsweise um ein Winkelinkrement verdreht auf die Außenverzahnung der Extruderwelle 2 aufgeschoben wurde. D. h., dass diese Linienabtastung, also der Vergleich über die Außengeometrie, nicht nur die Erfassung eines Verbaus eines etwaigen vom Typ her falschen Schneckenelements ermöglicht, sondern darüber hinaus auch die Erfassung eines etwaigen Fehlers bezüglich der Einbauwinkellage.

Es versteht sich von selbst, dass natürlich eine Extruderschnecke wesentlich mehr derartiger Bereiche aufweist respektive aus weit mehr Schneckenelementen besteht, mithin also auch das Höhenprofil selbstverständlich länger ist. Die Fig. 5 dient lediglich zu Erläuterungszwecken, aus ihr ist das grundsätzliche Funktionsprinzip ohne Weiteres ersichtlich.

Fig. 6 zeigt in den Teilfiguren a) und b) eine zweite Möglichkeit, die eine auf einer Überprüfung der Außengeometrie basierende Schneckenkontrolle erfolgen kann. Bei dieser Ausgestaltung handelt es sich bei dem Sensormittel 16 um eine Kamera, die Einzelbilder oder eine Videosequenz aufnimmt. Das Sensormittel 16 wird längs des Pfeils P z. B. in definierte Aufnahmepositionen verfahren, so dass beispielsweise drei, vier, fünf separate Einzelbilder der gesamten Extruderschnecke 2 aufgenommen werden. Die Steuerungseinrichtung 12 fügt diese einzelnen Bilder zusammen und erstellt quasi ein Gesamtbild der kompletten Extruderschnecke 2. Über geeignete Auswertealgorithmen, beispielsweise Kantendetektionsalgorithmen und Ähnliches, ist nun die Steuerungs- und Verarbeitungseinrichtung 12 in der Lage, innerhalb der Bilder detailliert die entsprechenden Kanten und folglich auch das Profil der Außengeometrie der Extruderschnecke 2 zu erfassen.

Fig. 6a) zeigt exemplarisch einen Ausschnitt aus einem solchen Gesamtbild der Extruderschnecke respektive den analysierten Kantenverläufen, die die Ist-Geometrie zeigen. Ersichtlich sind hier wiederum die drei Bereiche I, II und III exemplarisch dargestellt, vergleichbar zur Fig. 5. Hier jedoch nicht als Linienprofil, sondern als echte Außengeometriedarstellung respektive Kantenanalyse der Außengeometrie. Teilfigur b) in Fig. 6 zeigt die Soll-Information, also die Soll-Geometrie entweder des aufgenommenen Einzelbilds oder des entsprechenden Kantenanalyseergebnisses. Ersichtlich stimmen bei dieser Ausgestaltung die Geometrien in den Bereichen I und II überein, im Bereich III ist jedoch ein Montagefehler ersichtlich. Denn die beiden dort exemplarisch gezeigten Schneckenelemente 4 sind in ihrer Winkellage verdreht auf die Welle 3 aufgeschoben worden. Ersichtlich stimmt der Verlauf der wellenartigen Kante, die die Schulter der Förderschnecke darstellt, zwischen den Soll- und Ist-Geometrien nicht überein. D. h., dass die beiden Schneckenelemente 4 ganz offensichtlich ebenfalls in einer falschen Winkellage verbaut sind. Auch über diese Einzelbilder respektive Bildanalyse in Bezug auf Geometriekanten und Ähnliches kann folglich eine exakte Fehlererfassung erfolgen.

Das Sensormittel 16, also der Laser oder die Kammer, kann - dem Beispiel aus Fig. 3 entsprechend - auch am Zylinder des Extruders angeordnet sein, so dass die Abtastung bzw. Aufnahme der Extruderschnecke auch bei Verwendung dieser Sensormittel beim Einschieben der Extruderschnecke in den Zylinder erfolgt, ebenso die Auswertung der Informationen bzw. der Informationsvergleich. Bei korrekter Schnecke kann der Extruderbetrieb beginnen, anderenfalls nicht.

Während in den Fig. 5 und 6 jeweils Winkellagenfehler gezeigt sind, ist es offensichtlich, dass ein Verbau eines vom Typ her falschen Schneckenelements selbstverständlich noch zu gravierenderen Unterschieden innerhalb der jeweiligen Höhlenprofile gemäß Fig. 5 respektive der Außengeometriebilder gemäß Fig. 6 führen würden. Denn ist anstelle beispielsweise eines Förderelements ein Mischelement verbaut, so zeigt sich eine komplett andere Außengeometrie in diesem Bereich, was auf der Hand liegt.

Während die Fig. 5 und 6 die Verwendung eines Sensormittels 16 in Form eines Lasers oder einer Kamera beschreiben, ist es auch denkbar, als Sensormittel 16 quasi ein zweiteiliges Sensormittel zu verwenden, umfassend eine Linienlichtquelle, die in Richtung des Pfeils P oberhalb der Extruderschnecke 2 verfährt, und einen Linienlichtsensor, der exemplarisch in Fig. 4 gestrichelt dargestellt ist und mit dem Bezugszeichen 16a versehen ist, in Richtung des ebenfalls gestrichelten Pfeils P parallel zur Linienlichtquelle verfährt. Der Linienlichtsensor nimmt aufgrund der oberseitigen Beleuchtung der Extruderschnecke 2 durch die Linienlichtquelle ein Schattenbild der dazwischen befindlichen Extruderschnecke 2 auf. Dieses Schattenbild gibt selbstverständlich ebenfalls die Außengeometrie der Extruderschnecke 2 wieder. Die Steuerungs- und Verarbeitungseinrichtung 12 ist nun in der Lage, dieses Ist-Schattenbild mit einem Soll-Schattenbild zu vergleichen. Wiederum können hieraus entsprechende Aufbaufehler erkannt werden.

## Patentansprüche

1. System zur Überprüfung des Aufbaus einer Extruderschnecke (2) bestehend aus einer Welle (3) und darauf nacheinander in definierter Reihenfolge aufzuschiebender oder aufgeschobener
Schneckenelemente (4) während oder nach dem Aufschieben der Schneckenelemente (4) auf die Welle (3), umfassend eine Extruderschnecke (2) bestehend aus einer Welle und den aufzuschiebenden oder aufgeschobenen Schneckenelementen (4),
wobei jedes Schneckenelement (4) eine elementspezifische äußere Geometrie aufweist, sowie umfassend eine Erfassungseinrichtung zur Ermittlung von Informationen betreffend die Reihenfolge der aufzuschiebenden oder aufgeschobenen Schneckenelemente (4) und zum Vergleichen der ermittelten Informationen mit Soll-Informationen, die die Soll-Reihenfolge direkt oder indirekt beschreiben.

2. System nach Anspruch 1, **dadurch gekennzeichnet, dass** die Erfassungseinrichtung ein Sensormittel (9, 16) zur Erfassung von Informationen betreffend das jeweilige aufzuschiebende oder aufgeschobene Schneckenelement (4) oder betreffend die aus den einzelnen Schneckenelementen (4) definierte Ist-Geometrie der Extruderschnecke (2) und eine Steuerungs- und Verarbeitungseinrichtung (12) zum Vergleichen der erfassten Informationen mit Soll-Informationen, die die Reihenfolge der nacheinander aufzuschiebenden oder aufgeschobenen Schneckenelemente (4) oder die Soll-Geometrie der Extruderschnecke (2) beschreiben, umfasst.

3. System nach Anspruch 2, **dadurch gekennzeichnet, dass** das Sensormittel (9, 16) und die Extruderschnecke (2) oder die aufzuschiebenden Schneckenelemente (4) relativ zueinander bewegbar sind.

4. System nach Anspruch 2 oder 3, **dadurch gekennzeichnet, dass** jedes Schneckenelement (4) einen elementspezifischen Transponder (8) aufweist, und dass das Sensormittel (9) eine Leseeinrichtung (10) zum Erfassen der Transponderinformation ist.

5. System nach Anspruch 4, **dadurch gekennzeichnet, dass** der Transponder (8) an einer Stirnfläche (6) oder einer Mantelfläche einer Bohrung (5) des jeweiligen Schneckenelements (4) angeordnet ist, und dass die Leseeinrichtung (9) an einem an oder im Bereich der Welle (3) anzuordnenden Träger (11) angeordnet ist.

6. System nach Anspruch 4 oder 5, **dadurch gekennzeichnet, dass** die Leseeinrichtung (9) an einem die Extruderschnecke (2) aufnehmenden Extruder (17) derart, gegebenenfalls lösbar, angeordnet ist, dass die Transponderinformation automatisch beim Einschieben der Extruderschnecke (2) in den Extruder (1) erfassbar ist.

7. System nach Anspruch 2 oder 3, **dadurch gekennzeichnet, dass** das Sensormittel (16) ein optisches Sensormittel ist, mit dem die Ist-Geometrie beschreibende Informationen der Extruderschnecke (2) erfassbar sind.

8. System nach Anspruch 7, **dadurch gekennzeichnet, dass** das optische Sensormittel (16) ein Laser ist, mit dem die Oberfläche der Extruderschnecke (2) zur Erfassung eines Höhenprofils entlang einer Linie abgetastet wird, wobei das Höhenprofil seitens der Steuerungs- und Verarbeitungseinrichtung (12) ausgewertet wird.

9. System nach Anspruch 7, **dadurch gekennzeichnet, dass** das optische Sensormittel (16) eine Kamera ist, die Bilder der Extruderschnecke (2) aufnimmt, die, insbesondere seitens der Steuerungs- und Verarbeitungseinrichtung (12), zur Ermittlung der Informationen zur Ist-Geometrie verarbeitet werden.

10. System nach Anspruch 7, **dadurch gekennzeichnet, dass** das Sensormittel (16) eine Linienlichtquelle und einen Linienlichtsensor (16a) umfasst, wobei beide einander gegenüberliegend an unterschiedlichen Seiten der Extruderschnecke (2) angeordnet sind, derart, dass seitens des Linienlichtsensors (16a) ein Schattenbild des sich dazwischen befindlichen Bereichs der Extruderschnecke (2) aufgenommen wird, wobei das Schattenbild, insbesondere seitens der Steuerungs- und Verarbeitungseinrichtung (12), zur Ermittlung der Informationen zur Ist-Geometrie ausgewertet wird.

11. System nach einem der vorangehenden Ansprüche, **dadurch gekennzeichnet, dass** an der Welle (3) ein Speicherelement (14), insbesondere ein Transponder vorgesehen ist, und dass eine Schreibeinrichtung (13) vorgesehen ist, mittels der Informationen betreffend die Reihenfolge der aufgeschobenen Schneckenelemente (4) im Speicherelement (14) einschreibbar sind.

12. System nach einem der Ansprüche 2 bis 11, **dadurch gekennzeichnet, dass** die Steuerungs- und Verarbeitungseinrichtung (12) Teil eines Extruders (1), in den die Extruderschnecke (2) einzusetzen ist, ist.

13. Verfahren zur Überprüfung des Aufbaus einer Extruderschnecke bestehend aus einer Welle und darauf nacheinander in definierter Reihenfolge aufzuschiebenden oder aufgeschobenen Schneckenelementen während oder nach dem Aufschieben der Schneckenelemente (4) auf die Welle (3), wobei jedes Schneckenelement eine elementspezifische äußere Geometrie aufweist, **dadurch gekennzeichnet, dass** mit einer Erfassungseinrichtung Informationen betreffend die Reihenfolge der aufzuschiebenden oder aufgeschobenen Schneckenelemente ermittelt und mit Soll-informationen, die die Soll-Reihenfolge direkt oder indirekt beschreiben, verglichen werden, wobei in Abhängigkeit des Vergleichsergebnisses eine Überprüfungsinformation ausgegeben wird.

14. Verfahren nach Anspruch 13, **dadurch gekennzeichnet, dass** die Erfassungseinrichtung ein Sensormittel umfasst, mit dem Informationen betreffend das jeweilige aufzuschiebende oder aufgeschobene Schneckenelement oder betreffend die aus den einzelnen Schneckenelementen definierte Ist-Geometrie der Extruderschnecke erfasst werden, und dass mit einer Steuerungs- und Verarbeitungseinrichtung die erfassten Informationen mit Soll-Informationen, die die Reihenfolge der nacheinander aufzuschiebenden oder aufgeschobenen Schneckenelemente oder die Soll-Geometrie der Extruderschnecke beschreiben, verglichen werden, wobei vorzugsweise das Sensormittel und die Extruderschnecke oder die aufzuschiebenden Schneckenelemente zur Ermittlung der Informationen relativ zueinander bewegbar werden.

15. Verfahren nach Anspruch 14, **dadurch gekennzeichnet, dass** als Sensormittel eine Leseeinrichtung verwendet wird, mit der als Information die Transponderinformation eines an dem jeweiligen Schneckenelement angeordneten elementspezifischen Transponders erfasst wird, wobei vorzugsweise die Leseeinrichtung an einem an der Welle lösbar anzuordnenden Träger angeordnet wird und vorzugsweise Schneckenelemente verwendet werden, bei denen der Transponder an einer Stirnfläche oder einer Mantelfläche einer Bohrung des jeweiligen Schneckenelements angeordnet ist.

16. Verfahren nach Anspruch 15, **dadurch gekennzeichnet, dass** die Leseeinrichtung an einem die Extruderschnecke aufnehmenden Extruder, gegebenenfalls lösbar, angeordnet ist, wobei die Transponderinformation automatisch beim Einschieben der Extruderschnecke in den Extruder erfasst wird.

17. Verfahren nach Anspruch 14, **dadurch gekennzeichnet, dass** als Sensormittel ein optisches Sensormittel verwendet wird, mit dem die Ist-Geometrie beschreibende Informationen der Extruderschnecke erfasst werden.

18. Verfahren nach Anspruch 17, **dadurch gekennzeichnet, dass** als optisches Sensormittel ein Laser verwendet wird, mit dem die Oberfläche der Extruderschnecke zur Erfassung eines Höhenprofils entlang einer Linie abgetastet wird, wobei das Höhenprofil seitens der Steuerungs- und Verarbeitungseinrichtung ausgewertet wird.

19. Verfahren nach Anspruch 17, **dadurch gekennzeichnet, dass** als optisches Sensormittel eine Kamera verwendet wird, die Bilder der Extruderschnecke aufnimmt, die, insbesondere seitens der Steuerungs- und Verarbeitungseinrichtung, zur Ermittlung der Informationen zur Ist-Geometrie verarbeitet werden.

20. Verfahren nach Anspruch 17, **dadurch gekennzeichnet, dass** als das Sensormittel eine Linienlichtquelle und ein Linienlichtsensor verwendet wird, wobei beide einander gegenüberliegend an unterschiedlichen Seiten der Extruderschnecke angeordnet sind, derart, dass seitens des Linienlichtsensors ein Schattenbild des sich dazwischen befindlichen Bereichs der Extruderschnecke aufgenommen wird, wobei das Schattenbild, insbesondere seitens der Steuerungs- und Verarbeitungseinrichtung, zur Ermittlung der Informationen zur Ist-Geometrie ausgewertet wird.

21. Verfahren nach einem der Ansprüche 13 bis 20, **dadurch gekennzeichnet, dass** eine Schreibeinrichtung verwendet wird, mittels der Informationen betreffend die Reihenfolge der aufgeschobenen Schneckenelemente in einem an der Welle vorgesehenen Speicherelement eingeschrieben werden.

22. Verfahren nach einem der Ansprüche 14 bis 21, **dadurch gekennzeichnet, dass** als Steuerungs- und Verarbeitungseinrichtung die Steuerungs- und Verarbeitungseinrichtung des Extruders, in den die Extruderschnecke einzusetzen ist, verwendet wird.

23. Extruderschnecke, umfassend eine Welle (3) und mehrere auf diese ausschiebbare Schneckenelemente (4), zur Verwendung in einem Verfahren nach einem der Ansprüche 15 bis 16, **dadurch gekennzeichnet, dass** an jedem Schneckenelement (4) ein elementspezifischer Transponder (8) angeordnet ist.

24. Extruderschnecke nach Anspruch 23, **dadurch gekennzeichnet, dass** der Transponder (8) an einer Stirnfläche (6) oder einer Mantelfläche einer Bohrung (5) des jeweiligen Schneckenelements (4) angeordnet ist.

## Claims

1. System for checking the structure of an extruder screw (2) comprising a shaft (3) and screw elements (4) slid onto or to be slid onto the said shaft (3) one after another in a defined sequence, as or after the screw elements (4) are slid onto the shaft (3), comprising an extruder screw (2) composed of a shaft and the screw elements (4) slid on or to be slid on, each screw element (4) having an element-specific external geometry, and also comprising an acquisition device for determining information relating to the sequence of the screw elements (4) slid on or to be slid on and for comparing the information determined with target information which directly or indirectly describes the target sequence.

2. System according to Claim 1, **characterized in that** the acquisition device comprises a sensor means (9, 16) for acquiring information relating to the respective screw element (4) slid on or to be slid on or relating to the actual geometry of the extruder screw (2) defined from the individual screw elements (4), and a control and processing device (12) for comparing the acquired information with target information which describes the sequence of the screw elements (4) slid on or to be slid on one after another or the target geometry of the extruder screw (2).

3. System according to Claim 2, **characterized in that** the sensor means (9, 16) and the extruder screw (2) or the screw elements (4) to be slid on can be moved relative to one another.

4. System according to Claim 2 or 3, **characterized in that** each screw element (4) has an element-specific transponder (8) and **in that** the sensor means (9) is a reading device (10) for acquiring the transponder information.

5. System according to Claim 4, **characterized in that** the transponder (8) is arranged on an end face (6) or a peripheral face of a bore (5) of the respective screw element (4), and **in that** the reading device (9) is arranged on a carrier (11) to be arranged on or in the region of the shaft (3) .

6. System according to Claim 4 or 5, **characterized in that** the reading device (9) is arranged, possibly detachably, on an extruder (17) accommodating the extruder screw (2), in such a way that the transponder information can be acquired automatically as the extruder screw (2) is slid into the extruder (1).

7. System according to Claim 2 or 3, **characterized in that** the sensor means (16) is an optical sensor means, with which information describing the actual geometry of the extruder screw (2) can be acquired.

8. System according to Claim 7, **characterized in that** the optical sensor means (16) is a laser, with which the surface of the extruder screw (2) is scanned along a line in order to acquire a height profile, the height profile being evaluated by the control and processing device (12).

9. System according to Claim 7, **characterized in that** the optical sensor means (16) is a camera, which records images of the extruder screw (2), which are processed, in particular by the control and processing device (12), in order to determine the information relating to the actual geometry.

10. System according to Claim 7, **characterized in that** the sensor means (16) comprises a linear light source and a linear light sensor (16a), both being arranged opposite each other on different sides of the extruder screw (2), in such a way that a shadow image of the region of the extruder screw (2) located in between is recorded by the linear light sensor (16a), wherein the shadow image is evaluated, in particular by the control and processing device (12), in order to determine the information relating to the actual geometry.

11. System according to one of the preceding claims, **characterized in that** a memory element (14), in particular a transponder, is provided on the shaft (3), and **in that** a writing device (13) is provided, by means of which information relating to the sequence of the screw elements (4) slid on can be written into the memory element (14).

12. System according to one of Claims 2 to 11, **characterized in that** the control and processing device (12) is part of an extruder (1) into which the extruder screw (2) is to be inserted.

13. Method for checking the structure of an extruder screw comprising a shaft and screw elements slid on or to be slid onto the said shaft one after another in a defined sequence, as or after the screw elements (4) are slid onto the shaft (3), each screw element having an element-specific external geometry, **characterized in that** by using a detection device, information relating to the sequence of the screw elements slid on or to be slid on is determined and compared with target information which directly or indirectly describes the target sequence, an item of checking information being output as a function of the comparison result.

14. Method according to Claim 13, **characterized in that** the detection device comprises a sensor means, with which information relating to the respective screw element slid on or to be slid on or relating to the actual geometry of the extruder screw defined from the individual screw elements is acquired, and **in that**, by using a control and processing device, the information acquired is compared with target information which describes the sequence of the screw elements slid on or to be slid on one after another or the target geometry of the extruder screw, wherein the sensor means and the extruder screw or the screw elements to be slid on can preferably be moved relative to one another in order to determine the information.

15. Method according to Claim 14, **characterized in that** the sensor means used is a reading device, with which, as information, the transponder information of an element-specific transponder arranged on the respective screw element is acquired, wherein the reading device is preferably to be arranged on a carrier to be arranged detachably on the shaft, and use is preferably made of screw elements in which the transponder is arranged on an end face or a peripheral face of a bore of the respective screw element.

16. Method according to Claim 15, **characterized in that** the reading device is arranged, possibly detachably, on an extruder accommodating the extruder screw, wherein the transponder information is acquired automatically as the extruder screw is slid into the extruder.

17. Method according to Claim 14, **characterized in that** the sensor means used is an optical sensor means, with which information describing the actual geometry of the extruder screw is acquired.

18. Method according to Claim 17, **characterized in that** the optical sensor means used is a laser, with which the surface of the extruder screw is scanned along a line in order to acquire a height profile, wherein the height profile is evaluated by the control and processing device.

19. Method according to Claim 17, **characterized in that** the optical sensor means used is a camera, which records images of the extruder screw which are processed, in particular by the control and processing device, in order to determine the information relating to the actual geometry.

20. Method according to Claim 17, **characterized in that** the sensor means used is a linear light source and a linear light sensor, both being arranged opposite each other on different sides of the extruder screw, in such a way that a shadow image of the region of the extruder screw located in between is recorded by the linear light sensor, wherein the shadow image is evaluated, in particular by the control and processing device, in order to determine the information relating to the actual geometry.

21. Method according to one of Claims 13 to 20, **characterized in that** a writing device is used, by means of which information relating to this sequence of the screw elements slid on is written into a memory element provided on the shaft.

22. Method according to one of Claims 14 to 21, **characterized in that** the control and processing device used is the control and processing device of the extruder into which the extruded screw is to be inserted.

23. Extruder screw, comprising a shaft (3) and a plurality of screw elements (4) that can be slid onto the latter, for use in a method according to one of Claims 15 to 16, **characterized in that** an element-specific transponder (8) is arranged on each screw element (4).

24. Extruder screw according to Claim 23, **characterized in that** the transponder (8) is arranged on an end face (6) or a peripheral face of a bore (5) of the respective screw element (4).

## Revendications

1. Système de contrôle de la structure d'une vis sans fin d'extrudeuse (2), composée d'un arbre (3) et d'éléments de vis sans fin (4) à enfiler ou enfilés les uns après les autres sur celui-ci selon une séquence définie, pendant ou après l'enfilage des éléments de vis sans fin (4) sur l'arbre (3), comprenant une vis sans fin d'extrudeuse (2) composée d'un arbre et des éléments de vis sans fin (4) à enfiler ou enfilés, chaque élément de vis sans fin (4) présentant une forme géométrique extérieure spécifique à l'élément, et comprenant également un dispositif d'acquisition destiné à déterminer des informations concernant la séquence des éléments de vis sans fin (4) à enfiler ou enfilés et à comparer les informations déterminées avec des informations de consigne qui décrivent directement ou indirectement la séquence de consigne.

2. Système selon la revendication 1, **caractérisé en ce que** le dispositif d'acquisition comprend des moyens de détection (9, 16) destinés à acquérir des informations concernant l'élément de vis sans fin (4) à enfiler ou enfilé correspondant ou concernant la forme géométrique réelle de la vis sans fin d'extrudeuse (2) définie par les éléments de vis sans fin (4) individuels, et un dispositif de commande et de traitement (12) destiné à comparer les informations acquises avec des informations de consigne qui décrivent la séquence des éléments de vis sans fin (4) à enfiler ou enfilés les uns après les autres ou la forme géométrique de consigne de la vis sans fin d'extrudeuse (2).

3. Système selon la revendication 2, **caractérisé en ce que** les moyens de détection (9, 16) et la vis sans fin d'extrudeuse (2) ou les éléments de vis sans fin (4) à enfiler sont mobiles les uns par rapport aux autres.

4. Système selon la revendication 2 ou 3, **caractérisé en ce que** chaque élément de vis sans fin (4) possède un transpondeur (8) spécifique à l'élément, et **en ce que** les moyens de détection (9) sont un dispositif de lecture (10) destiné à acquérir les informations de transpondeur.

5. Système selon la revendication 4, **caractérisé en ce que** le transpondeur (8) est disposé sur une surface frontale (6) ou une enveloppe d'un alésage (5) de l'élément de vis sans fin (4) correspondant, et **en ce que** le dispositif de lecture (9) est disposé sur un support (11) à monter sur l'arbre (3) ou dans la zone de celui-ci.

6. Système selon la revendication 4 ou 5, **caractérisé en ce que** le dispositif de lecture (9) est disposé, éventuellement de manière amovible, sur une extrudeuse (17) qui accueille la vis sans fin d'extrudeuse (2) de telle sorte que les informations de transpondeur peuvent être acquises automatiquement lors de l'insertion de la vis sans fin d'extrudeuse (2) dans l'extrudeuse (1).

7. Système selon la revendication 2 ou 3, **caractérisé en ce que** le moyen de détection (16) est un moyen de détection optique qui permet d'acquérir des informations de la vis sans fin d'extrudeuse (2) qui décrivent la forme géométrique réelle.

8. Système selon la revendication 7, **caractérisé en ce que** le moyen de détection optique (16) est un laser avec lequel la surface de la vis sans fin d'extrudeuse (2) est balayée le long d'une ligne en vue d'acquérir un profil de hauteur, le profil de hauteur étant interprété par le dispositif de commande et de traitement (12).

9. Système selon la revendication 7, **caractérisé en ce que** le moyen de détection optique (16) est une caméra qui enregistre des images de la vis sans fin d'extrudeuse (2), lesquelles sont notamment traitées par le dispositif de commande et de traitement (12) en vue de déterminer les informations relatives à la forme géométrique réelle.

10. Système selon la revendication 7, **caractérisé en ce que** les moyens de détection optique (16) comprennent une source lumineuse linéaire et un capteur de lumière linéaire (16a), les deux étant disposés en face l'un de l'autre sur des côtés différents de la vis sans fin d'extrudeuse (2), de telle sorte qu'une silhouette de la zone de la vis sans fin d'extrudeuse (2) qui se trouve entre eux est enregistrée par le capteur de lumière linéaire (16a), la silhouette étant interprétée en vue de déterminer les informations relatives à la forme géométrique réelle, notamment par le dispositif de commande et de traitement (12).

11. Système selon l'une des revendications précédentes, **caractérisé en ce qu'**un élément de mémoire (14), notamment un transpondeur, est présent sur l'arbre (3), et **en ce qu'**il existe un dispositif d'écriture (13) au moyen duquel peuvent être écrites dans l'élément de mémoire (14) des informations concernant la séquence des éléments de vis sans fin (4) enfilés.

12. Système selon l'une des revendications 2 à 11, **caractérisé en ce que** le dispositif de commande et de traitement (12) est une partie d'une extrudeuse (1) dans laquelle est à insérer la vis sans fin d'extrudeuse (2).

13. Procédé de contrôle de la structure d'une vis sans fin d'extrudeuse, composée d'un arbre et d'éléments de vis sans fin à enfiler ou enfilés les uns après les autres sur celui-ci selon une séquence définie, pendant ou après l'enfilage des éléments de vis sans fin (4) sur l'arbre (3), chaque élément de vis sans fin présentant une forme géométrique extérieure spécifique à l'élément, **caractérisé en ce que** des informations concernant la séquence des éléments de vis sans fin à enfiler ou enfilés sont déterminées avec un dispositif d'acquisition et comparées avec des informations de consigne qui décrivent directement ou indirectement la séquence de consigne, une information de contrôle étant délivrée en fonction du résultat de la comparaison.

14. Procédé selon la revendication 13, **caractérisé en ce que** le dispositif d'acquisition comprend un moyen de détection avec lequel sont acquises des informations concernant l'élément de vis sans fin à enfiler ou enfilé correspondant ou concernant la forme géométrique réelle de la vis sans fin d'extrudeuse définie par les éléments de vis sans fin individuels, et **en ce que** les informations acquises sont comparées par un dispositif de commande et de traitement avec des informations de consigne qui décrivent la séquence des éléments de vis sans fin à enfiler ou enfilés les uns après les autres ou la forme géométrique de consigne de la vis sans fin d'extrudeuse, le moyen de détection et la vis sans fin d'extrudeuse ou les éléments de vis sans fin à enfiler étant de préférence mobiles les uns par rapport aux autres en vue de déterminer les informations.

15. Procédé selon la revendication 14, **caractérisé en ce que** le moyen de détection utilisé est un dispositif de lecture avec lequel sont acquises comme informations les informations de transpondeur d'un transpondeur spécifique à l'élément disposé sur l'élément de vis sans fin correspondant, le dispositif de lecture étant de préférence disposé sur un support à monter de manière amovible sur l'arbre et les éléments de vis sans fin utilisés sont de préférence des éléments de vis sans fin avec lesquels le transpondeur est disposé sur une surface frontale ou une enveloppe d'un alésage de l'élément de vis sans fin correspondant.

16. Procédé selon la revendication 15, **caractérisé en ce que** le dispositif de lecture est disposé, éventuellement de manière amovible, sur une extrudeuse qui accueille la vis sans fin d'extrudeuse, les informations de transpondeur étant acquises automatiquement lors de l'insertion de la vis sans fin d'extrudeuse dans l'extrudeuse.

17. Procédé selon la revendication 14, **caractérisé en ce que** le moyen de détection est un moyen de détection optique qui permet d'acquérir des informations de la vis sans fin d'extrudeuse qui décrivent la forme géométrique réelle.

18. Procédé selon la revendication 17, **caractérisé en ce que** le moyen de détection optique utilisé est un laser avec lequel la surface de la vis sans fin d'extrudeuse est balayée le long d'une ligne en vue d'acquérir un profil de hauteur, le profil de hauteur étant interprété par le dispositif de commande et de traitement.

19. Procédé selon la revendication 17, **caractérisé en ce que** le moyen de détection optique utilisé est une caméra qui enregistre des images de la vis sans fin d'extrudeuse, lesquelles sont notamment traitées par le dispositif de commande et de traitement en vue de déterminer les informations relatives à la forme géométrique réelle.

20. Procédé selon la revendication 17, **caractérisé en ce que** le moyen de détection optique utilisé est une source lumineuse linéaire et un capteur de lumière linéaire, les deux étant disposés en face l'un de l'autre sur des côtés différents de la vis sans fin d'extrudeuse, de telle sorte qu'une silhouette de la zone de la vis sans fin d'extrudeuse qui se trouve entre eux est enregistrée par le capteur de lumière linéaire, la silhouette étant interprétée en vue de déterminer les informations relatives à la forme géométrique réelle, notamment par le dispositif de commande et de traitement.

21. Procédé selon l'une des revendications 13 à 20, **caractérisé en ce qu'**un dispositif d'écriture est utilisé, au moyen duquel des informations concernant la séquence des éléments de vis sans fin enfilés peuvent être écrites dans un élément de mémoire qui est présent sur l'arbre.

22. Procédé selon l'une des revendications 14 à 21, **caractérisé en ce que** le dispositif de commande et de traitement utilisé est le dispositif de commande et de traitement de l'extrudeuse dans laquelle est à insérer la vis sans fin d'extrudeuse.

23. Vis sans fin d'extrudeuse, comprenant un arbre (3) et plusieurs éléments de vis sans fin (4) enfilables sur celui-ci, destinée à être utilisé dans un procédé selon l'une des revendications 15 à 16, **caractérisée en ce qu'**un transpondeur (8) spécifique à l'élément est disposé sur chaque élément de vis sans fin (4).

24. Vis sans fin d'extrudeuse selon la revendication 23, **caractérisée en ce que** le transpondeur (8) est disposé sur une surface frontale (6) ou une enveloppe d'un alésage (5) de l'élément de vis sans fin (4) correspondant.
